# FASCICULE DE BREVET EUROPEEN

(11) **EP 3 424 674 B1**
(45) Date de publication et mention de la délivrance du brevet: **27.11.2019**
(21) Numéro de dépôt: 18170202.8
(22) Date de dépôt: 30.04.2018
(51) Int. Cl.: B29C 45/27

(54) **INSTALLATION DE MOULAGE PAR INJECTION LATERALE**
VORRICHTUNG ZUM LATERALEN, SEITLICHEN SPRITZGIESSEN
APPARATUS FOR LATERAL INJECTION MOLDING

(30) Priorité: 06.07.2017 FR 1756361
(43) Date de publication de la demande: 09.01.2019
(73) Titulaire: CEMA Technologies, 72100 Le Mans (FR)
(72) Inventeur: BOUILLOUD, Marc, 72200 La Fleche (FR); PERROCHON, Julien, 72000 Le Mans (FR); MARTIN, Emmanuel, 2550 Degré (FR)
(74) Mandataire: Laget, Jean-Loup

(56) Documents cités:
- JP-A- S55 140 537
- US-A1- 2005 067 510
- US-A1- 2017 182 691

## Description

### DOMAINE DE L'INVENTION

L'invention concerne une installation de moulage par injection latérale.

Dans les installations de moulage de matière plastique, la matière plastique est fondue, acheminée à l'état liquide à des pointes d'injection et injectée dans les cavités moulantes. Après solidification dans les cavités moulantes, les empreintes sont extraites et libérées pour leur utilisation.

### ART ANTERIEUR

La technique de moulage par injection, notamment par injection latérale est connue, ainsi que ses difficultés liées en grande partie à la température. En effet, pour acheminer aux pointes d'injection une matière plastique fluide, l'ensemble distributeur, ou bloc répartiteur, doit être à une température de l'ordre de 200 à 400°C, alors que les cavités moulantes sont à la température ambiante.

A la mise en service de l'installation de moulage, le bloc répartiteur doit avoir été chauffé à la température de fonctionnement, ce qui correspond pour lui à des modifications de dimensions. Le bloc répartiteur étant constitué de plusieurs pièces pour assurer l'acheminement de la matière plastique fluide, certaines de ces pièces ont des mouvements relatifs.

Pour que la qualité du moulage soit homogène, il faut que l'écoulement de la matière plastique fluide dans les canaux à l'intérieur du bloc répartiteur ne soit pas perturbé par des décalages relatifs des canaux entre deux pièces. Il faut aussi qu'il n'y ait pas de décalage entre la pointe d'injection et le seuil d'injection de la cavité moulante.

Le document WO 2012/115614 décrit un bloc répartiteur dans lequel des canaux sont décalés au montage à froid pour être alignés correctement lors du moulage à chaud. De plus, les pointes d'injection sont soumises à l'action de ressorts pour assurer leur positionnement relatif satisfaisant par rapport à la buse d'injection.

Le document EP 2 427 317 décrit un bloc répartiteur pour injection latérale portant quatre pointes d'injection.

Le document JP S55 140537 décrit un dispositif de moulage par injection latérale dans lequel un bloc d'injection glisse dans un bloc à cavités de moulage. Les pointes d'injection, sollicitées par ressort, glissent sur la surface du bloc à cavités jusqu'à être en face des cavités de moulage.

Le document US 2005/0067510 décrit un dispositif d'injection latérale à plan de symétrie, ou à symétrie de révolution.

Le document EP 3 025 841 décrit un bloc répartiteur portant deux séries de quatre pointes d'injection chacune, et des moyens réglables à chaud de mise sous tension mécanique pour assurer un positionnement correct des pointes d'injection par rapport aux seuils d'injection des cavités moulantes. Par ailleurs, le bloc répartiteur est alimenté par une buse chaude au moyen d'une interface à pivot glissant non prévue pour un démontage/remontage facile et fréquent.

Le document WO 2014/032165 décrit un appareil de moulage par injection latérale utilisant deux pointes en vis-à-vis pour chaque empreinte. Les empreintes sont moulées en lignes de quatre empreintes chacune.

Dans la plupart des documents de l'art antérieur, les pointes d'injection alimentées simultanément sur une face du bloc répartiteur sont au nombre de quatre. Pour dépasser ce nombre, une autre ligne de quatre pointes d'injection est disposée parallèlement à la première. Cette disposition en lignes de quatre pointes d'injection de même orientation induit la construction de blocs répartiteurs de forme rectangulaire. Lorsqu'un tel bloc est chauffé à sa température normale de fonctionnement, il est soumis à dilatation et les variations de dimensions en longueur et en largeur du bloc sont différentes et difficiles à maitriser. Pour assurer le contrôle des positions relatives des différentes composants de l'installation de moulage, tous ces composants sont assemblés dans un ensemble solidaire regroupant les fonctions de transport de matière plastique fluide, de répartition entre les pointes d'injection et d'injection proprement dite. Il en résulte une difficulté en cas de changement de matière plastique pour le moulage. Il faut en effet démonter alors l'ensemble solidaire pour le nettoyage de toutes les pièces et ensuite le remonter, ce qui correspond à un temps d'immobilisation de l'installation long et préjudiciable.

Par ailleurs, en raison de la complexité du bloc répartiteur, le temps de stagnation de la matière plastique fluide dans le circuit chauffé s'accompagne d'une dégradation des polymères de la matière plastique.

### BUT ET RESUME

L'un des buts de l'invention est de proposer une installation par injection latérale qui évite les inconvénients précités.

Un autre but de l'invention est de proposer une installation de moulage par injection latérale qui alimente un plus grand nombre de pointes d'injection.

L'invention a pour objet une installation de moulage par injection latérale au moyen d'une pluralité de pointes d'injection coplanaires alimentées en matière plastique fluide par un bloc répartiteur, en forme de parallélépipède rectangle, caractérisée en ce que les pointes d'injection sont placées en appui sur les faces latérales du bloc répartiteur, en position d'accostage, et en ce que le bloc alimente plusieurs pointes d'injection sur chacune de ses faces latérales.

De manière avantageuse, le bloc répartiteur est alimenté en matière plastique fluide par une buse axiale isolée et indépendante.

Avantageusement, entre la buse axiale et chacune des pointes d'injection, des canalisations internes au bloc répartiteur assurent une équidistance.

De préférence, la hauteur du bloc répartiteur est de l'ordre de 20% du côté de sa base.

Avantageusement, le bloc répartiteur est réalisée d'une seule pièce.

Selon un mode de réalisation, sur chacune de ses faces latérales, le bloc répartiteur alimente quatre pointes d'injection.

De préférence, le bloc répartiteur comporte quatre faces latérales.

### BREVE DESCRIPTION DES FIGURES

L'invention est décrite ci-après avec référence aux dessins annexés dans lesquels.

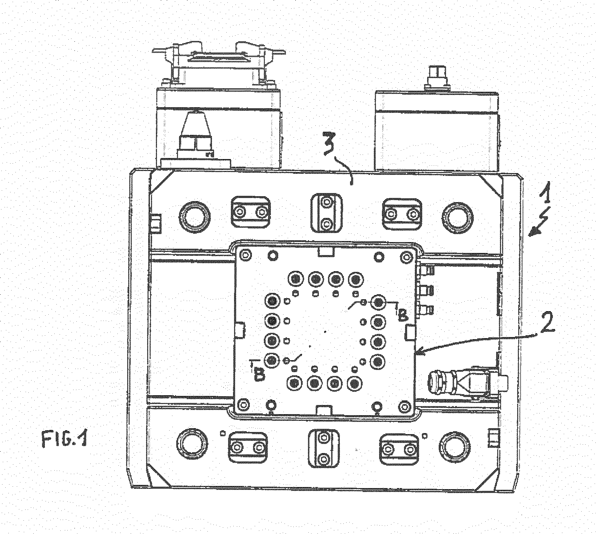

La Figure 1 est une vue de dessus d'une installation de moulage selon un mode de réalisation de l'invention.

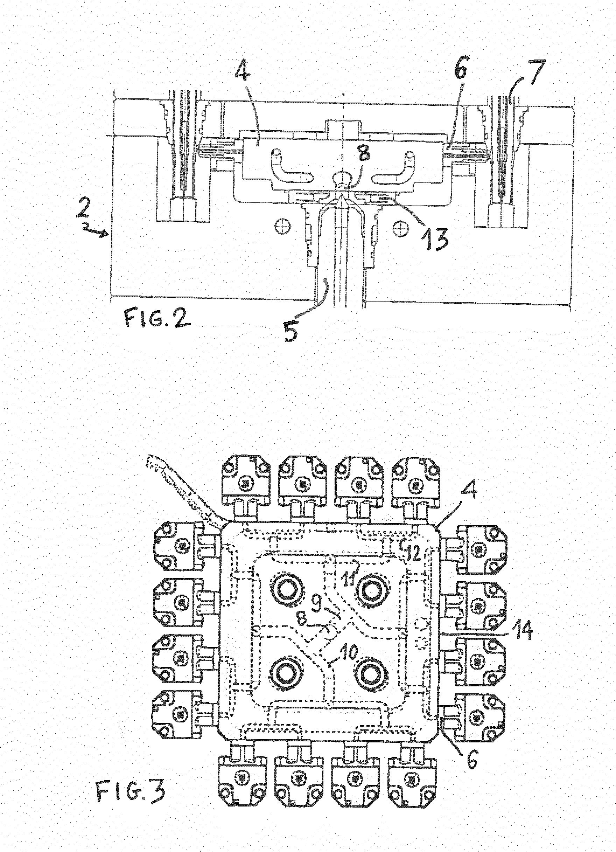

La Figure 2 est une vue partielle, en coupe verticale, selon la ligne B-B de la Figure 1.
La Figure 3 est une vue de dessus du bloc répartiteur montrant les canalisations d'alimentation en matière plastique fluide des pointes d'injection.

### DESCRIPTION DETAILLEE

L'installation de moulage 1 comprend une partie centrale 2 et une armature extérieure 3 assurant la tenue mécanique de l'installation, et le chauffage de la matière plastique et des canalisations pour l'amener à l'état fluide jusqu'au bloc répartiteur 4. La partie centrale 2 comprend essentiellement une buse axiale 5, le bloc répartiteur 4, les pointes d'injection 6 et les cavités moulantes 7.

Selon un mode de réalisation de l'invention, le bloc répartiteur 4 est en forme de parallélépipède rectangle, de section horizontale carrée et de section verticale rectangulaire de hauteur faible par rapport à sa base. Sur chacune de ses quatre faces latérales 14 sensiblement identiques, sont disposées quatre pointes d'injection 6 d'axe horizontal. Chacune de ces pointes d'injection 6 alimente une cavité moulante 7 disposée par exemple verticalement devant la pointe d'injection.

Le rôle du bloc répartiteur 4 est d'alimenter en matière plastique fluide les seize pointes d'injection 6 simultanément. A cet effet, la buse chaude 5 est disposée axialement pour alimenter le bloc répartiteur 4 dans son axe géométrique, par une canalisation axiale 8. Cette canalisation axiale 8 se divise en deux canalisations radiales 9, alignées sur une diagonale du bloc répartiteur 4 et alimentant chacune huit pointes d'injection 6 disposées sur deux faces 14 adjacentes du bloc répartiteur 4. La canalisation 9 se divise en deux canalisations 10, alimentant chacune les quatre pointes d'injection 6 d'une face 14 du bloc répartiteur 4. La canalisation 10 se divise en deux canalisations 11, alimentant chacune deux pointes d'injection adjacentes de la face du bloc répartiteur 4. La canalisation 11 se divise en deux canalisations 12 alimentant chacune une pointe d'injection 6. Les canalisations étant disposées en respectant chaque fois la règle de symétrie, toutes les seize pointes d'injection sont alimentées simultanément à partir de la buse chaude axiale 5 avec le minimum de distance parcourue et un équilibrage naturel par équidistance des sorties du bloc répartiteur 4 par rapport à la canalisation axiale 8 d'alimentation du bloc répartiteur 4.

Par ailleurs, les canalisations 8 à 12 sont dimensionnées pour que le temps de stagnation de la matière plastique fluide dans ces canalisations soit minimal. A cet effet, la géométrie des canaux est réalisée avec des arrondis pour éviter les zones mortes et augmenter la vitesse de circulation de la matière plastique fluide.

Selon une disposition particulière à l'invention, les pointes d'injection 6 sont placées en appui sur les faces latérales 14 du bloc répartiteur 4, en position d'accostage. Ainsi, en l'absence de moulage, avec un bloc répartiteur froid, les pointes d'injection sont libres, ce qui permet leur démontage pour nettoyage ou remplacement. Lorsque le bloc répartiteur 4 est chaud pour assurer le moulage, la dilatation du bloc répartiteur assure le blocage des pointes d'injection 6.

Par ailleurs, la dilatation du bloc répartiteur 4 s'effectuant essentiellement en direction radiale par rapport à l'axe de la buse 5 d'alimentation, les canalisations 12 d'alimentation des pointes d'injection et les pointes d'injection 6 elles-mêmes restent coaxiales.

Le bloc répartiteur 4 est fixé à la partie centrale 2 de l'installation de moulage 1 avec interposition d'une interface isolante 13, de telle sorte que les échanges de chaleur entre la partie centrale 2 et le bloc répartiteur 4 soient limités et que la température du bloc répartiteur soit aussi régulière que possible. Cette interface isolante 13 est de préférence limitée à la zone centrale du bloc répartiteur 4, autour de la buse chaude axiale 5 qui est ainsi isolée du bloc répartiteur.

La buse axiale 5 et le bloc répartiteur 4 sont montés en position relative d'accostage à plat. De cette façon, la buse axiale est indépendante du bloc répartiteur 4, ce qui assure l'amovibilité du bloc répartiteur et son démontage/remontage facile, par exemple pour nettoyage en cas de changement de matière plastique. Selon un mode préféré de réalisation, le bloc répartiteur 4 pour installation de moulage 1 à injection latérale est réalisé d'une seule pièce en forme de parallélépipède rectangle. Sa base est carrée, et sa hauteur est comprise entre 10% et 50%, de préférence, de l'ordre de 20%, du côté de sa base. Il est alimenté en matière plastique fluide par une buse axiale 5. Sur chacune de ses quatre faces latérales 14, il alimente quatre pointes d'injection 6. Les seize pointes d'injection sont coplanaires.

## Revendications

1. Installation de moulage par injection latérale au moyen d'une pluralité de pointes d'injection coplanaires alimentées en matière plastique fluide par un bloc répartiteur en forme de parallélépipède rectangle, alimenté en matière plastique fluide par une buse axiale (5) isolée et indépendante les pointes d'injection étant placées en appui sur les faces latérales du bloc répartiteur (4), en position d'accostage, **caractérisé en ce que** le bloc alimente plusieurs pointes d'injection (6) sur chacune de ses faces latérales (14), et **en ce que**, entre la buse axiale (5) et chacune des pointes d'injections (6), des canalisations (8-12) internes au bloc répartiteur (4) assurent une équidistance

2. Installation de moulage selon la revendication 1 **caractérisée en ce que** la hauteur du bloc répartiteur (4) est de l'ordre de 20% du côté de sa base.

3. Installation de moulage selon la revendication 1 **caractérisée en ce que** le bloc répartiteur (4) est réalisé d'une seule pièce.

4. Installation de moulage selon la revendication 1 **caractérisée en ce que** sur chacune de ses faces latérales (14), le bloc répartiteur (4) alimente quatre pointes d'injection (6).

5. Installation de moulage selon la revendication 1 **caractérisée en ce que** le bloc répartiteur comporte quatre faces latérales (14).

## Patentansprüche

1. Anlage zum seitlichen Spritzgießen mittels einer Vielzahl koplanarer Spritzgießspitzen, die mit fluidem Kunststoffmaterial von einem rechteckigen parallelepipedischen Verteilerblock versorgt werden, der mit fluidem Kunststoffmaterial von einer isolierten und unabhängigen axialen Düse (5) versorgt wird, wobei die Spritzgießspitzen aufstützend auf den Seitenflächen des Verteilerblocks (4) platziert sind, in Andockposition, **dadurch gekennzeichnet, dass** der Block mehrere Spritzgießspitzen (6) auf jeder seiner Seitenflächen (14) versorgt und dass zwischen der axialen Düse (5) und jeder der Spritzgießspitzen (6) innere Kanalisationen (8-12) des Verteilerblocks (4) einen gleichen Abstand sichern.

2. Spritzgießanlage nach Anspruch 1, **dadurch gekennzeichnet, dass** die Höhe des Verteilerblock (4) zirka 20 % von der Seite seiner Basis beträgt.

3. Spritzgießanlage nach Anspruch 1, **dadurch gekennzeichnet, dass** der Verteilerblock (4) aus einem einzigen Stück hergestellt ist.

4. Spritzgießanlage nach Anspruch 1, **dadurch gekennzeichnet, dass** der Verteilerblock (4) auf jeder seiner Seitenflächen (14) vier Spritzgießpunkte (6) versorgt.

5. Spritzgießanlage nach Anspruch 1, **dadurch gekennzeichnet, dass** der Verteilerblock vier Seitenflächen (14) aufweist.

## Claims

1. A facility for molding by lateral injection using a plurality of coplanar injection points supplied with fluid plastic material by a rectangular parallelepiped distribution block, supplied with fluid plastic material by an insulated and independent axial nozzle (5) the injection points being placed bearing on the lateral faces of the distribution block (4), in the docking position, **characterized in that** the supply block supplies several injection points (6) on each of its lateral faces (14), and **in that**, between the axial nozzle (5) and each of the injection points (6), channels (8-12) inside the distribution block (4) ensure an equal distance.

2. The molding facility according to claim 1, **characterized in that** the height of the distribution block (4) is about 20% of the side of its base.

3. The molding facility according to claim 1, **characterized in that** the distribution block (4) is made in one piece.

4. The molding facility according to claim 1, **characterized in that** on each of its lateral faces (14), the distribution block (4) supplies four injection points (6).

5. The molding facility according to claim 1, **characterized in that** the distribution block includes four lateral faces (14).
